# EUROPEAN PATENT SPECIFICATION

(11) **EP 0 992 719 B1**
(45) Date of publication and mention of the grant of the patent: **25.01.2006**
(21) Application number: 98118872.5
(22) Date of filing: 06.10.1998
(51) Int. Cl.: F16J 15/12

(54) **Filler material for spiral wound gasket and spiral wound gasket**
Füllmaterial für spiralförmige Dichtung und spiralförmige Dichtung
MATERIAU DE REMPLISSAGE pour Garniture spiralée et garniture spiraleé

(43) Date of publication of application: 12.04.2000
(73) Proprietor: NIPPON PILLAR PACKING CO. LTD., Osaka-shi Osaka-fu (JP)
(72) Inventor: Hashiguchi, Hideto, Shimouchigami, Sanda-shi, Hyogo-ken (JP); Ueda, Takahisa, Shimouchigami, Sanda-shi, Hyogo-ken (JP); Miyoshi, Takeshi, Shimouchigami, Sanda-shi, Hyogo-ken (JP)
(74) Representative: Fleuchaus, Leo

(56) References cited:
- EP-A- 0 391 069
- FR-A- 2 693 783
- GB-A- 2 066 383
- US-A- 5 161 807
- US-A- 5 683 091
- PATENT ABSTRACTS OF JAPAN vol. 095, no. 008, 29 September 1995 & JP 07 118627 A (NIPPON PILLAR PACKING CO LTD), 9 May 1995

## Description

### Background of the Invention

### 1. Field of the Invention

The present invention relates to a filler material for a spiral wound gasket applied to various pipe joints and joint portions of fluid equipments for sealing fluid such as liquid including water and oil, and gaseous body including vapor and gas.

Further, the present invention relates to a spiral wound gasket formed by using the above-mentioned filler material.

### 2. Description of the Prior art

The conventionally known typical spiral wound gasket comprises a hoop material made of metal band plate having corrugate cross section such as V-shape or W-shape, a filler material made of asbestos paper, which are overlapped with each other and wound in the form of a spiral (US 5,683,091).

However, in such a spiral wound gasket, the asbestos paper used as a filler material generates fine particles when it is handled, and it is pointed out that if people inhale the fine particles, it ruins health. For this reason, the asbestos paper is refrained from being used at present. As alternative filler material, there has been developed a spiral wound gasket using, , as a filler material, expansive graphite tape of non-asbestos.

In the conventional expansive graphite tape wherein the expansive graphite particles are only pressurized, the expansive graphite particles are compressed and deformed on the surface layer thereof, thin-leaf compressed members form a dense layer which is in a high density and high orientation state. It is lacking in flexibility and bending properties. If it is applied to the wound gasket, there are troubles wherein a crack happens, and a space is formed between hoop materials, thereby causing problems of insufficient sealing properties.

Such expanded graphite sealing material is known from JP-A-07118627. This material is blast breated on the surface in order to expandedly open or raise expanded graphite particles and provided adhesive strength.

Further, in order to enhance the sealing property of the spiral wound gasket using the expansive graphite filler material, there have been proposed a gasket using auxiliary filler material comprising PTFE fiber (tetrafluoride polyethylene resin fiber) having graphite in addition to the expansive graphite filler material, and a gasket comprising the expansive graphite filler material and carbon fiber incorporated therein and extended along a longitudinal direction.

However, the conventional spiral wound gasket using the expansive graphite filler material has the following problems:
(1) Since a tensile strength of the expansive graphite tape is low, it is prone to be damaged when it is wound in the form of a spiral.
(2) Since an elongation of the expansive graphite tape is small and lacks a flexibility, the tape can not be deformed along a space shape formed between the metal band plate hoop materials, and a clearance is prone to be generated, and the tape is prone to be split if it is to be bent. Especially if the tape is combined with the hoop material having corrugate cross section, when they are wound in the form of a spiral, the vertex of the corrugate is split and a clearance is generated there, and for this reason, there is a possibility that a slight infiltration may be generated in the widthwise direction or winding direction of the spiral.
(3) The expansive graphite tape formed merely by pressurizing the expansive graphite particles have fine clearances therein, but its surface has a dense layer of expansive graphite particles at high density and high orientation. Therefore, it is difficult to impregnate or coat various weather stripping which are carried out when the asbestos paper is used. Especially, the surface of the expansive graphite tape has a water-repellent property under existence of the above-mentioned dense layer, leakage of water is inferior, and it is difficult to improve the sealing property by impregnating or coating the weather stripping of water-dispersion type, for example.
(4) A filler material in which PTFE-based auxiliary sealing member is also used, or carbon fiber is compounded is expensive as a material, and producing process therefor is complicated, if the PTFE-based auxiliary sealing member is used jointly, heat-resistance is lowered.

### Summary of the Invention

The present invention has been accomplished in view of the above circumstances.

An object of the present invention is to provide a filler material for a spiral wound gasket in which flexibility, bending property and pliability are largely improved to enhance the productivity.

Another object of the invention is to provide a filler material for a spiral wound gasket in which a sealing property is remarkably enhanced even at a surface pressure generated under the condition that a fastening force is small.

Another object of the invention is to provide a spiral wound gasket using such a filler material.

To achieve the above objects, a filler material as defined in claim 1 is provided. In this filler material, since the dense layer portion of high density is completely removed, flexibility is improved, flexible bending property is provided so that pliability is enhanced, and bending strength is also improved.

In the present invention, the compressed members of the inner layer, which are thicker than those of the surface layer, are arranged under the high density dense layer of the expanded graphite tape. The present invention was made by newly finding that an inner layer having fine clearance (i.e., a fine space) exists under the high density dense layer thereof.

According to the present invention,
1) the surface layer of the expanded graphite tape is removed so that the weight may be reduced, for example, by 0,5% by weight, thereby exposing an inner layer having an excellent flexibility and bending properties. Therefore, in the winding step of producing the spiral wound gasket, even in case of forming a bending-deformation between hoop materials made of metal band plate, which has a small curvature, there is no crack, whereby there is no possibility of causing an unnecessary space between the hoop materials. As a result, the present invention can much better prevent a leakage caused by the above mentioned cracks and spaces.
2) In the present invention, an inner layer which has the fine space and which is made of easily deformable graphite particles, compared to a high density dense layer, is exposed as a surface layer. As a result, fitting properties between inside and outside surfaces of each adjacent hoop material are remarkably enhanced, whereby a contact surface contacted on the hoop material is a closely fitting surface without any spaces. Therefore, the present invention can prevent a leakage caused by fine spaces generated on the contact surface which is contacted on the hoop material.

Further, since the projection which is continuous in the longitudinal direction of the tape is provided, when the hoop material having a corrugated cross section is used, density at the vertex of the corrugated shape can be increased, and it is possible to prevent a leakage in the winding direction when the spiral wound gasket is formed from being generated, and to further enhance the sealing property.

The spiral wound gasket according to the invention is formed by overlapping the above filler material and a hoop material made of metal band plate with each other and winding them in the form of a spiral.

Since this spiral wound gasket uses the filler material whose various characteristics are improved, when it is wound in the form of a spiral, the filler material is not easily damaged and thus, the productivity of the gasket is improved. Furthermore, it is easy to deform the filler material along a space shape formed between the hoop materials, the filler is not easily split against the bending, and clearance is not generated, or the possibility of generation of the clearance can be reduced largely, and it is possible to remarkably enhance the sealing property of the spiral wound gasket as a whole. When the filler material has the projection, it is desirable that a ratio of height and width of the projection projecting from its opposite sides is 1:10.

Further, a shape of cross section of the metal band plate may be corrugated. In such a case, it is desirable that the front or back surface of the expansive graphite tape from which at least a portion of the high density portion is removed is contacted with a valley of the metal band plate. The spiral wound gasket can include an inner diameter d1=72.6 mm, an outer diameter d2=92.5 mm and a thickness t1=14.5 mm.

A weather stripping may be coated or impregnated in the expansive graphite tape. As the weather stripping, polyethylene glycol, PTFE, wax, silicon resin, rubber and the like is preferably used. If the weather stripping is coated or impregnated in the expansive graphite tape, it is possible to easily carry out the coating on the weather stripping, and occlude fine clearance existing in the expansive graphite tape, which is effective for improving the sealing property at a low surface pressure.

As described above, according to the filler material of the invention, various characteristics of the productivity and sealing property which are required when the expansive graphite filler material is used as a filler material for spiral would gasket instead of the asbestos can be remarkably improved by the extremely simple means, i.e., by removing the high density portion.

Further, according to the spiral wound gasket of the invention, since the filler material whose various characteristics are improved is used, not only the productivity, but also the sealing property can remarkably improved.

The above and other features and advantages of the invention will become more apparent from the following description of preferred embodiments.

### Brief Description of the Drawings

FIG. 1 is a perspective sectional view of an essential portion of a filler material for a spiral wound gasket according to an embodiment 1 of the invention;
FIG. 2 is a perspective sectional view of an essential portion of a filler material for a spiral wound gasket according to an embodiment 2 of the invention;
FIG. 3 is a perspective sectional view of an essential portion of a filler material for a spiral wound gasket according to an embodiment 3 of the invention;
FIG. 4 is a perspective sectional view of an essential portion of a filler material for a spiral wound gasket according to an embodiment 4 of the invention;
FIG. 5 is a perspective sectional view of an essential portion of a filler material for a spiral wound gasket according to a comparative example;
FIG. 6 is a half vertical section of the spiral wound gasket of the invention;
FIG. 7 is a diagram for explaining a test method for a normal-temperature gas seal;
FIG. 8 is a diagram for showing the result of the test method for the normal-temperature gas seal;
FIG. 9 is a diagram for explaining 90° bending test; and
FIG. 10 is a diagram for explaining a winding test.

### Detailed Description of the Preferred Embodiments

Embodiments of the present invention will be explained in accordance with the drawings below.

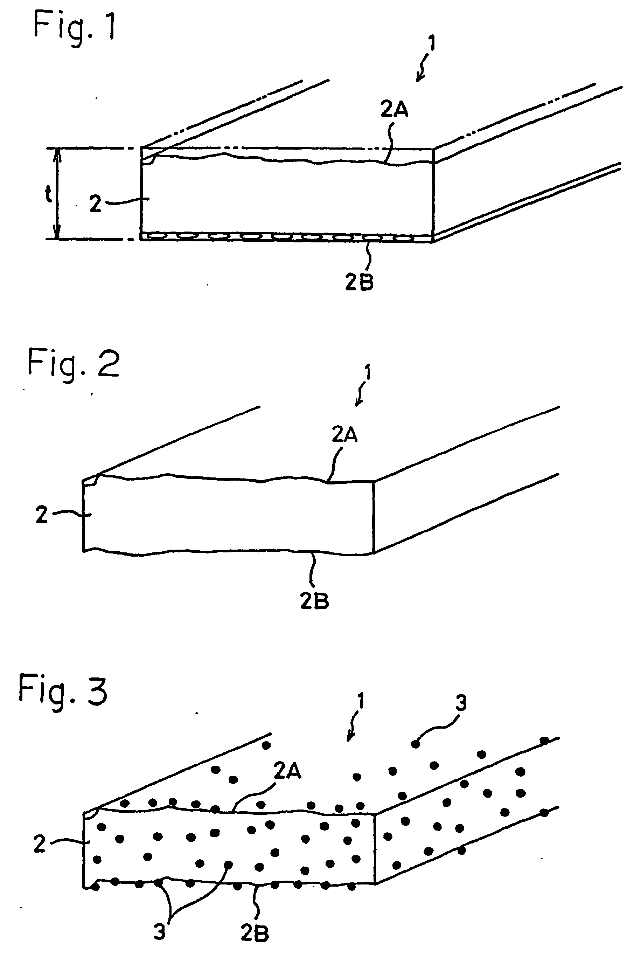

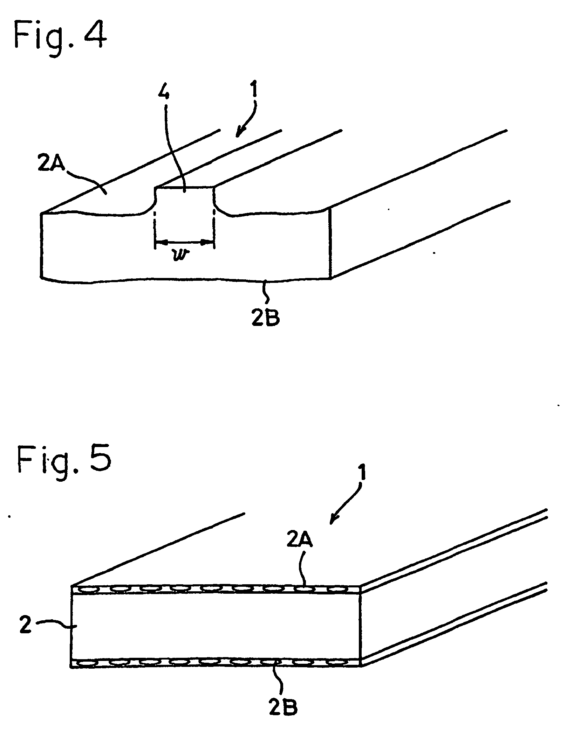

Each of filler materials 1 for a spiral wound gasket according to embodiments 1, 2, 3 and 4 shown in FIGS. 1, 2, 3 and 4, respectively, as well as according to a comparative example shown in FIG. 5 is formed into a tape-like expansive graphite tape 2 by integrally pressurizing expanded graphite particles. A thickness t of the expansive graphite tape 2 (thickness t is shown in FIG. 1, and omitted in FIGS. 2 to 5) is 0.38 mm. The expansive graphite tape 2 is subjected to the following treatments. The treatment for the front and back surfaces of the expansive graphite tape 2 conducted each of the embodiments and the comparative example will be explained below.

### Embodiment 1:

As shown in FIG. 1, the expansive graphite tape 2 is uniformly subjected to a blast treatment such that the weight is reduced by 0.5% by weight, thereby removing high density dense layer portions. The reference numeral 2A denotes a front surface of the expansive graphite tape 2. High density dense layer portion on a back surface 2B of the expansive graphite tape 2 is left as it is.

### Embodiment 2:

As shown in FIG. 2, the expansive graphite tape 2 is uniformly subjected to a blast treatment such that the weight is reduced by 1% by weight in total, thereby removing high density dense layer portions from both the front and back surfaces. The reference numerals 2A and 2B denote the front and back surfaces of the expansive graphite tape 2, respectively.

### Embodiment 3:

As shown in FIG. 3, the expansive graphite tape 2 is uniformly subjected to a blast treatment such that the weight is reduced by 1% by weight in total, thereby removing high density dense layer portions from both the front and back surfaces. Then, 20% by weight of polyethylene glycol 3 as one example of weather stripping is impregnated to interiors and both the front and back surfaces 2A, 2B and clearances of inside thereof. Other than polyethylene glycol, PTFE, wax, silicon resin, rubber or the like may be used as the weather stripping.

### Embodiment 4:

Using the filler material 1 for the spiral wound gasket in the embodiment 2, a projection 4 having a width w of 1 mm is continuously formed, in the longitudinal direction, on a widthwise central portion of a front surface 2A of the expansive graphite tape 2 from which the high density dense layer portions are removed as shown in Fig. 4. The projection 4 is higher than opposite sides by 0.1 mm.

### Comparative Example:

As shown in FIG. 5, the front surface 2A and back surface 2B of the expansive graphite tape 2 are subjected to no treatment, and high density dense layer portions exist.

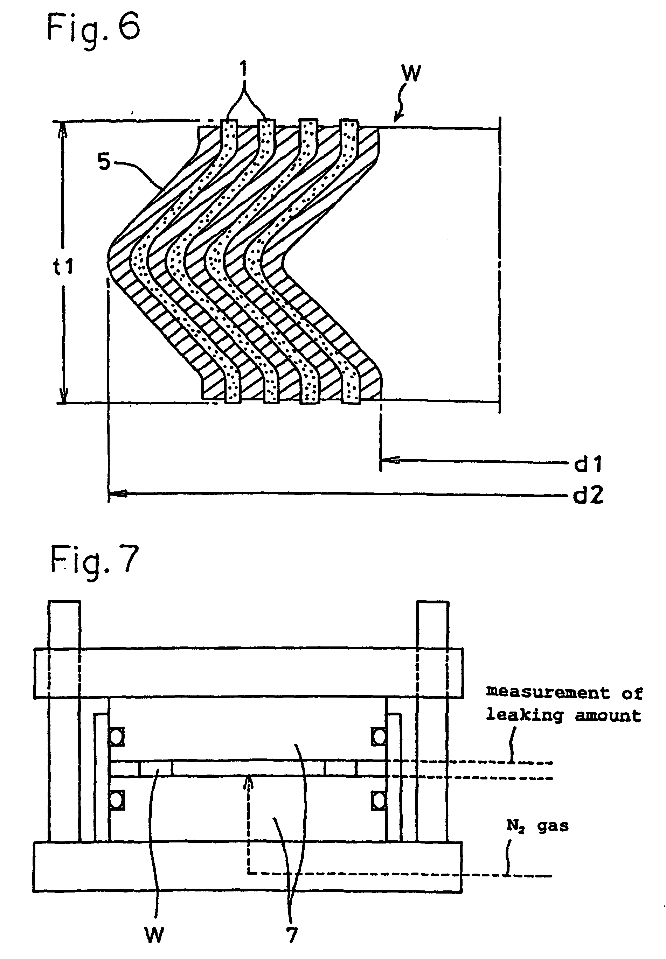

FIG. 6 shows a sectional structure of a spiral wound gasket W (sample). This spiral wound gasket W is formed by overlapping the filler materials 1 of the embodiments 1 to 4 and of the comparative example with metal band plate having a generally V-shaped cross section, more specifically, hoop material 5 of SUS 304, and winding in the form of spiral. The spiral wound gasket W has an inner diameter d1=72.6 mm, an outer diameter d2=92.5 mm and a thickness t1=14.5 mm. As to the embodiment 1, the spiral wound gasket W is wound such that the surface 2A from which high density dense layer portions are removed by the blast treatment is contacted with valley of the hoop material 5.

A normal temperature gas sealing test was conducted for each of the spiral wound gaskets W (samples) formed using the filler materials 1 and hoop materials 5 of the embodiments 1 to 4 and the comparative example.

As shown in FIG. 7, the normal temperature gas sealing test method is a method for repeating the following three steps: (1) a step of pressurizing each of the samples W by a pair of upper and lower pressurizing flanges 7, 7 at a predetermined surface pressure and keeping the pressurized state for three minutes; (2) applying N₂ gas and keeping such state for five minutes and then, measuring a leakage amount by a known soap film moving method; and (3) decompressing the N₂ gas to normal pressure and then raising the pressure to the next standard surface pressure.

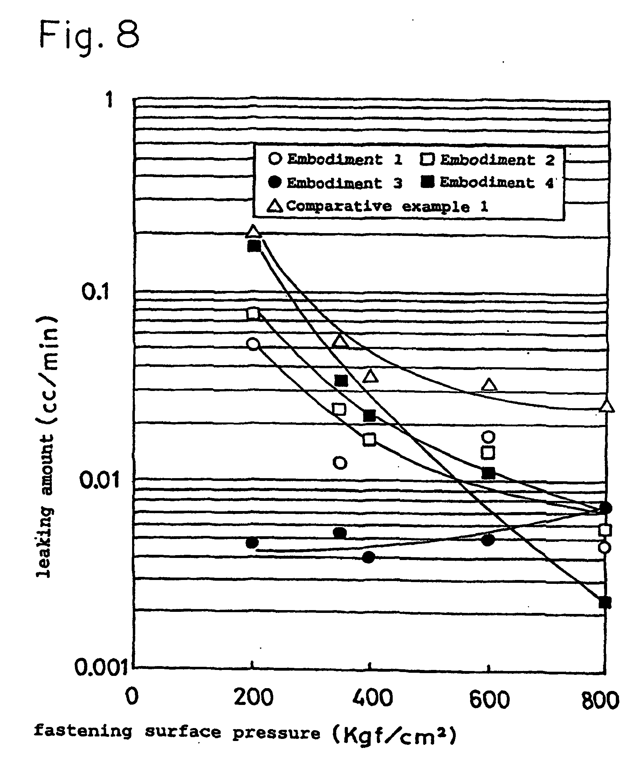

The results of the normal temperature gas sealing test are shown in FIG. 8. As apparent from this test results, although there is no difference in sealing characteristic in the spiral wound gasket using the filler material of the embodiment 1 and 2, the sealing property is superior to that of the comparative example. As to the spiral wound gasket using the filler material of the embodiment 3, although there is no remarkable change in sealing property at a surface pressure in the range of 200 to 800 kgf/cm², an excellent sealing property is exhibited at a low surface pressure of about 200 kgf/cm². As to the spiral wound gasket using the filler material of the embodiment 4, although there is no remarkable improvement in sealing property at a surface pressure of 200 kgf/cm², a remarkable sealing property of a fastening surface pressure is recognized at a surface pressure of 350 kgf/cm² or higher.

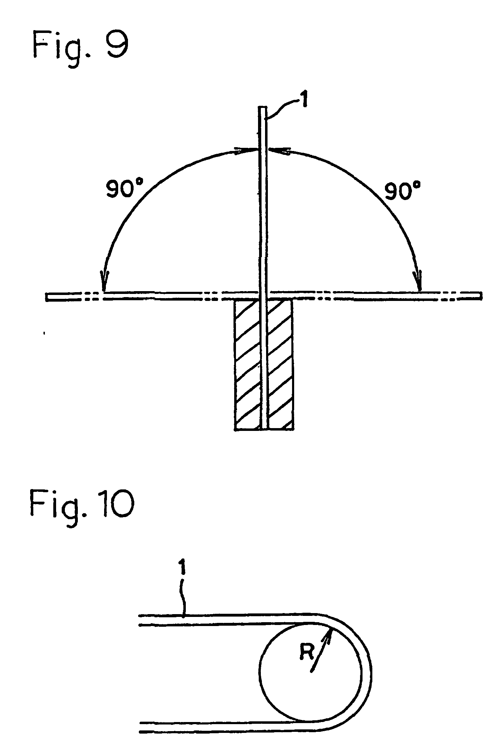

A 90° bending test was conducted for the filler material 1 of the embodiment 2 which is one of the materials of the invention, and conventional materials 1, 2, 3 and 4 shown in Table 1. As shown in FIG. 9, the 90° bending test is a test for alternately bending the filler material in opposite direction in thickness direction through 90° . The results of the 90° bending test are shown in Table 2. From Table 2, it can be seen that in the case of the conventional materials 1 to 4, the maximum number of bending times is 12.2 times, in the case of the present invention, the number of bending times is more than 1,000 times and thus, the latter is superior in flexibility.

**Table 1**

| Sample | Conventional material 1 | Conventional material 2 | Conventional material 3 | Conventional material 4 | Embodiment 2 |
|---|---|---|---|---|---|
| Raw material graphite | ramentum | ramentum | ramentum | ramentum | ramentum |
| Rate of expansion (%) | 120 | 140 | 140 | 180 | 180 |
| Number of rolling (times) | 6 | 6 | 8 | 8 | 8 |
| Seat density (g/cm³) | 1.0 | 1.0 | 1.0 | 1.0 | 1.0 |
| Thickness (mm) | 0.38 | 0.38 | 0.38 | 0.38 | 0.38 |
| Removal from surface | Not removed | Not removed | Not removed | Not removed | 0.5 % by weight is removed from both surfaces |

**Table 2**

| Sample | Conventional material material 1 | Conventional 2 | Conventional material 3 | Conventional material 4 | Embodiment 2 |
|---|---|---|---|---|---|
| The possible bending number (times) | 1.6 | 3.0 | 5.3 | 12.2 | More than 1,000 |

Further, a winding test as shown in FIG. 10 was conducted for the filler material 1 of the embodiment 2 which is one of the materials of the invention, and conventional materials 3 and 4 shown in Table 1. The results are shown in Table 3. In the case of the conventional materials, the possible minimum winding radius was 4.5 mm, whereas, in the case of the material of the invention, the possible minimum winding radius R was extremely small as 1.5 mm, and the latter has excellent flexibility and flexible bending property.

**Table 3**

| Sample | Conventional material | Conventional 3 material 4 | Embodiment 2 |
|---|---|---|---|
| Possible winding radius (mm) | 4.5 | 6 | 1.5 |

The hoop material 5 of the spiral wound gasket W formed by using the filler material 1 of each of the embodiments 1 to 4 should not be limited to one having a V-shaped cross section described with reference to FIG. 6, and the hoop material 5 may be formed into a corrugate shape having a generally W-shaped or U-shaped cross section or into a flat plate shape.

## Claims

1. Filler material for a spiral wound gasket, comprising:
an expanded graphite tape (2) formed by integrally pressurizing expanded graphite partides, the front and back surface of the tape having a dense layer of expansive graphite particles at high density and high orientation,
**characterized in that**
the dense layer portion of the front and/or back surface (2A, 2B) is completely removed by a blast treatment such that flexibility and pliability are improved.

2. Filler material according to claim 1,
**characterized in that**
a projection, which is continuous along a longitudinal direction of the tape, is formed on the front or back surface (2A, 2B) of said tape (2).

3. Filler material according to either of claims 1 or 2,
**characterized in that**
the front and/or back surface (2A, 2B) is coated or impregnated with a weather stripping (3).

4. Filler material according to claim 3,
**characterized in that**
the weather stripping (3) is selected from a group consisting of polyethylene glycol, PTFE, wax, silicone resin and rubber.

5. Filler material according to claim 2,
**characterized in that**
the ratio of height to width of said projection is 1:10.

6. Method for producing a filler material for a spiral wound gasket, comprising the steps of:
- forming an expanded graphite tape (2) by integrally pressurizing expanded graphite particles, the front and back surface of the tape having a dense layer of expansive graphite partides at high density and high orientation;
- subjecting at least a front and/or back surface (2A, 2B) of the expanded graphite tape (2) to a blast treatment,
**characterized by** the step of
completely removing the dense layer portion of the front and/or back surface (2A, 2B) by said blast treatment such that flexibility and pliability is improved.

7. Method for producing a filler material according to claim 6,
**characterized by** the step of
forming a projection, which is continuous along a longitudinal direction of the tape, on the front or back surface (2A, 2B) of said tape (2).

8. Method for producing a filler material according to either of claims 6 or 7,
**characterized by** the step of
coating or impregnating the front and/or back surface (2A, 2B) with a weather stripping (3).

9. Method for producing a filler material according to claim 8,
**characterized in that**
the weather stripping (3) is selected from a group consisting of polyethylene glycol, PTFE, wax, silicone resin and rubber.

10. Method for producing a filler material according to claim 7,
**characterized in that**
the ratio of height to width of said projection is 1:10.

11. Use of a filler material according to either of the preceding claims in a spiral wound gasket, wherein the gasket is formed by overlapping the filler material and a hoop material made of a metal band plate (5) with each other and winding them in the form of a spiral.

12. Use of a filler material according to claim 11, wherein the metal band plate (5) is corrugated.

13. Use of a filler material according to claim 11 or 12, wherein said front and/or back surface of said expanded graphite tape (2) from which said high density layer portion is removed is contacted with a valley of said metal band plate (5).

## Patentansprüche

1. Füllmaterial für eine spiralförmig gewickelte Flanschdichtung, umfassend:
ein expandiertes Graphit-Band (2) welches durch ein verpressen von expandierten Graphitpartikeln gebildet ist, wobei die Vorder- und Rückseite des Bandes eine dichte Schicht von expandierten Graphitpartikeln mit hoher Dichte und hoher Orientierung aufweist,
**dadurch gekennzeichnet, dass**
der dichte Schichtbereich der Vorder- und/oder Rückseite (2A, 2B) durch eine Strahl-Behandlung vollständig entfernt wird, so dass die Flexibilität und Biegsamkeit erhöht werden.

2. Füllmaterial gemäss Anspruch 1,
**dadurch gekennzeichnet, dass**
ein Vorsprung, welcher kontinuierlich entlang einer Längsrichtung des Bandes verläuft auf der Vorder- oder Rückseite (2A, 2B) des Bandes (2) gebildet wird.

3. Füllmaterial gemäss einem der Ansprüche 1 oder 2,
**dadurch gekennzeichnet, dass**
die Vorder- und/oder Rückseite (2A, 2B) mit einem Dichtmaterial (3) beschichtet oder imprägniert wird.

4. Füllmaterial gemäss Anspruch 3,
**dadurch gekennzeichnet, dass**
das Dichtmaterial (3) aus einer Gruppe ausgewählt ist, welche Polyethylenglykol, PTFE, Wachs, Silikonharz und -gummi enthält.

5. Füllmaterial gemäss Anspruch 2,
**dadurch gekennzeichnet, dass**
das Verhältnis von Höhe zu Breite des Vorsprungs 1:10 ist.

6. Verfahren zur Herstellung eines Füllmaterials für eine spiralförmig gewickelte Flanschdichtung, umfassend die Schritte:
- bilden eines expandierten Graphit-Bandes (2) durch ein verpressen von expandierten Graphitpartikeln, wobei die Vorder- und Rückseite des Bandes eine dichte Schicht von expandierten Graphitpartikeln mit hoher Dichte und hoher Orientierung aufweist;
- anwenden einer Strahl-Behandlung auf wenigstens eine Vorder- und/oder Rückseite (2A, 2B) des expandierten Graphit-Bandes (2),
**dadurch gekennzeichnet, dass**
durch die Strahl-Behandlung der dichte Schichtbereich der Vorder- und/oder Rückseite (2A, 2B) vollständig entfernt wird, so dass die Flexibilität und Biegsamkeit erhöht werden.

7. Verfahren zur Herstellung eines Füllmaterials gemäss Anspruch 6,
**gekennzeichnet durch** den Schritt des
bildens eines Vorsprungs, welcher entlang einer Längsrichtung des Bandes verläuft auf der Vorder- oder Rückseite (2A, 2B) des Bandes (2).

8. Verfahren zur Herstellung eines Füllmaterials gemäss einem der Ansprüche 6 oder 7
**gekennzeichnet durch** den Schritt des
Beschichtens oder Imprägnierens der Vorder- und/oder Rückseite (2A, 2B) mit einem Dichtmaterial (3).

9. Verfahren zur Herstellung eines Füllmaterials gemäss Anspruch 8
**dadurch gekennzeichnet, dass**
das Dichtmaterial (3) aus einer Gruppe ausgewählt ist, welche Polyethylenglykol, PTFE, Wachs, Siliconhartz und -gummi enthält.

10. Verfahren zur Herstellung eines Füllmaterials gemäss Anspruch 7,
**dadurch gekennzeichnet, dass**
das Verhältnis von Höhe zu Breite des Vorsprungs 1:10 ist.

11. Verwendung eines Füllmaterials gemäss einem der vohergehenden Ansprüche in einer Spiralförmig gewickelten Flanschdichtung, wobei die Flanschdichtung durch Überlappung des Füllmaterials und einem Ringmaterial bestehend aus Bandmetall (5) und anschließendem Wickeln derselben in eine Spiralform gebildet wird.

12. Verwendung eines Füllmaterials gemäss Anspruch 11, wobei das Bandmetall (5) gewellt ist.

13. Verwendung eines Füllmaterials gemäss Anspruch 11 oder 12, wobei die Vorder-und/oder Rückseite des expandierten Graphit-Bandes (2), von welchen der Schichtbereich hoher Dichte entfernt wurde, mit einem Wellental des Bandmetalls (5) in Kontakt steht.

## Revendications

1. Un matériau de remplissage pour un joint d'étanchéité bobiné en forme de spirale comprenant :
une bande graphite expansée (2) formée en injectant intégralement des particules graphite expansées, où la surface avant et arrière de la bande a une couche dense de particules graphite expansées à haute densité et haute orientation,
**caractérisé en ce que**
la portion de couche dense de la surface avant et/ou arrière (2a, 2b) est complètement supprimée par un traitement sablage de sorte que la flexibilité et la pliabilité sont augmentées.

2. Matériau de remplissage selon la revendication 1
**caractérisé en ce que**
une saillie, continue le long d'une direction longitudinale de la bande est formée sur la surface avant ou arrière (2a, 2b) de ladite bande (2).

3. Matériau de remplissage selon l'une des revendications 1 ou 2
**caractérisé en ce que**
la surface avant et/ou arrière (2a, 2b) est recouverte ou imprégnée d'un matériau d'étanchéité (3).

4. Matériau de remplissage selon la revendication 3
**caractérisé en ce que**
le matériau d'étanchéité (3) est sélectionné parmi un groupe comprenant glycol ployéthylénique, PTFE, cire, résine de silicone et caoutchouc.

5. Matériau de remplissage selon la revendication 2
**caractérisé en ce que**
le ratio longueur sur largeur de ladite saillie est de 1 :10.

6. Procédé pour produire un matériau de remplissage pour joint d'étanchéité bobiné en forme de spirale comprenant les étapes de :
formation d'une bande graphite expansée (2) en injectant intégralement des particules graphite expansées, où la surface avant et arrière de la bande a une couche dense de particules graphite expansées à haute densité et haute orientation ;
application à au moins une surface avant et/ou arrière (2a, 2b) de la bande graphite expansée (2) d'un traitement sablage,
**caractérisé en ce que**
par l'étape de traitment sablage, la portion de couche dense de la surface avant et/ou arrière (2a, 2b) est supprimée complètement de sorte que la flexibilité et la pliabilité sont augmentées.

7. Procédé pour produire un matériau de remplissage selon la revendication 6
**caractérisé par** l'étape de
formation d'une saillie, continue le long d'une direction longitudinale de la bande sur la surface avant ou arrière (2a, 2b) de ladite bande (2).

8. Procédé pour produire un matériau de remplissage selon l'une des revendications 6 ou 7
**caractérisé par** l'étape de
recouvrement ou imprégnation de la surface avant et/ou arrière (2a, 2b) avec un matériau d'étanchéité (3).

9. Procédé pour produire un matériau de remplissage selon la revendication 8
**caractérisé en ce que**
le matériau d'étanchéité (3) est sélectionné parmi un groupe comprenant glycol polyéthylénique, PTFE, cire, résine de silicone et caoutchouc.

10. Procédé pour produire un matériau de remplissage selon la revendication 7
**caractérisé en ce que**
le ratio longueur sur largeur de la dite saillie est de 1 :10

11. Utilisation d'un matériau de remplissage selon l'une des revendications précédentes dans un joint d'étanchéité bobiné.en forme de spirale, où le joint d'étanchéité est formé par recouvrement du matériau de remplissage et d'un matériau en forme d'anneau composé de plaque en métal (5) l'un avec l'autre et ensuite bobinage en forme de spirale.

12. Utilisation d'un matériau de remplissage selon la revendication 11 où la plaque en métal (5) est ondulée.

13. Utilisation d'un matériau de remplissage selon la revendication 11 ou 12 où ladite surface avant et/ou arrière de ladite bande graphite expansée (2) de laquelle ladite portion de couche de haute densité est supprimée, est en contact avec une vallée de ladite plaque en métal (5).
